# EUROPÄISCHE PATENTSCHRIFT

(11) **EP 2 121 772 B1**
(45) Veröffentlichungstag und Bekanntmachung des Hinweises auf die Patenterteilung: **21.11.2012**
(21) Anmeldenummer: 08708641.9
(22) Anmeldetag: 04.02.2008
(51) Int. Cl.: C08F 2/34, C08F 20/06, C08F 2/01, C08F 2/44, C08F 2/10, C08F 2/16, C08F 2/18, C08F 220/06

(54) **VERFAHREN ZUR HERSTELLUNG VON POLYMERPARTIKELN DURCH POLYMERISATION VON FLÜSSIGKEITSTROPFEN IN EINER GASPHASE**
METHOD FOR PRODUCING POLYMER PARTICLES BY THE POLYMERISATION OF LIQUID DROPLETS IN A GAS PHASE
PROCÉDÉ DE PRODUCTION DE PARTICULES POLYMÈRES PAR POLYMÉRISATION DE GOUTTES DE LIQUIDE DANS UNE PHASE GAZEUSE

(30) Priorität: 06.02.2007 EP 07101837
(43) Veröffentlichungstag der Anmeldung: 25.11.2009
(73) Patentinhaber: BASF SE, 67056 Ludwigshafen (DE)
(72) Erfinder: LÖSCH, Dennis, 67122 Altrip (DE); HILLEBRECHT, Annemarie, 36093 Künzell (DE); KRÜGER, Marco, 68161 Mannheim (DE); BLEI, Stefan, 68163 Mannheim (DE); WEISMANTEL, Matthias, 63637 Jossgrund (DE); HEIDE, Wilfried, 67251 Freinsheim (DE)
(86) Internationale Anmeldenummer: PCT/EP2008/051337
(87) Internationale Veröffentlichungsnummer: WO 2008/095893

(56) Entgegenhaltungen:
- WO-A-01/81450
- WO-A-2006/079631
- WO-A-2007/093531
- US-B1- 6 414 052

## Beschreibung

Die vorliegende Erfindung betrifft ein Verfahren zur Herstellung von Polymerpartikeln durch Polymerisation von Flüssigkeitstropfen in einer die Tropfen umgebenden Gasphase, wobei die Tropfen mindestens ein Monomer enthalten und während der Polymerisation mit partikulären Feststoffen beschichtet werden.

US 5,269,980 beschreibt ein Verfahren zur Polymerisation monodisperser Tropfenketten in einer umgebenden erwärmten Gasphase. Die Tropfenketten werden erzeugt, indem die zu polymerisierende Lösung durch eine Vielzahl von Bohrungen definierter Größe hindurchtritt.

WO 2006/079631 A1 lehrt die Herstellung wasserabsorbierender Polymerpartikel durch Polymerisation monodisperser Tropfenketten in einer umgebenden erwärmten Gasphase. Die erhaltenen Polymerpartikel können anschließend Agglomeriert werden.

Durch Polymerisation von Flüssigkeitstropfen in einer Gasphase können die Verfahrensschritte Polymerisation und Trocknung zusammengefasst werden. Zusätzlich kann die Partikelgröße durch geeignete Verfahrensführung in gewissen Grenzen eingestellt werden.

EP 0 496 594 A2 offenbart ein Verfahren zur Herstellung wasserabsorbierender Polymerpartikel, wobei während des Verfahrens anfallendes Unterkorn in die Polymerisation rückgeführt wird.

EP 0 945 143 A2 offenbart ein Verfahren zur Beschichtung wasserabsorbierender Polymerpartikel mit wasserabsorbierenden Polymerpartikeln, wobei die zur Beschichtung verwendeten Polymerpartikel höher vernetzt sind.

Aufgabe der vorliegenden Erfindung war die Bereitstellung eines verbesserten Verfahrens zur Herstellung von Polymerpartikeln durch Polymerisation von Flüssigkeitstropfen in einer die Tropfen umgebenden Gasphase.

Insbesondere war es eine Aufgabe der vorliegenden Erfindung ein Verfahren bereitzustellen, das wenig störanfällig ist und eine hohe Ausbeute ermöglicht.

Gelöst wurde die Aufgabe durch ein Verfahren zur Herstellung von Polymerpartikeln durch Polymerisation von Flüssigkeitstropfen, enthaltend mindestens ein Monomer, in einer die Tropfen umgebenden Gasphase, dadurch gekennzeichnet, dass die Tropfen während der Polymerisation mit partikulären Feststoffen beschichtet werden.

Durch die Beschichtung läßt sich die Bildung von Agglomeraten und Wandbelägen während der Polymerisation verhindern.

Insbesondere bei der Polymerisation von Monomerlösungen führt eine zu schnelle Trocknung zu niedrigen Monomerumsätzen. Andererseits sind Polymerpartikel mit höherem Lösungsmittelgehalt auch klebriger und haben daher auch eine erhöhte Neigung zur Bildung von Agglomeraten und Wandbelägen.

Durch die Beschichtung mit partikulären Feststoffen läßt sich nun die Bildung von Agglomeraten und Wandbelägen zurückdrängen.

Der mittlere Durchmesser der erzeugten Tropfen beträgt vorzugsweise mindestens 200 um,besonders bevorzugt mindestens 250 µm, ganz besonders bevorzugt mindestens 300 µm, wobei der Tropfendurchmesser durch Lichtstreuung bestimmt werden kann.

Der Durchmesser der partikulären Feststoffen beträgt vorzugsweise weniger als 200 µm, besonders bevorzugt weniger als 150 µm, ganz besonders bevorzugt weniger als 100 µm, auf, wobei der Partikeldurchmesser durch Lichtstreuung bestimmt werden kann.

Die partikulären Feststoffe können auch selber Polymerpartikel sein.

In einer bevorzugten Ausführungsform der vorliegenden Erfindung werden im Verfahren zwangsweise anfallende Polymerpartikel, beispielsweise durch Polymerisation zu kleiner Tropfen oder Abrieb, verwendet und auf diese Weise in das Verfahren rückgeführt.

Die Art der Beschichtung unterliegt keiner Beschränkung. Beispielsweise ist es möglich die Polymerisation in Gegenwart eines Kreisgases durchzuführen und den partikulären Feststoff in dem Kreisgas vorzudispergieren. Es ist aber auch möglich die partikulären Feststoffe mittels einer oder mehrerer Zweistoffdüsen in den Reaktionsraum zu dosieren.

In der vorliegenden Erfindung werden die partikulären Feststoffe in einem Bereich zudosiert, wo der Monomerumsatz weniger als 90 mol-%, vorzugsweise wenigerals 75 mol-%, besonders bevorzugt weniger als 60 mol-%, ganz besonders bevorzugt weniger als 45 mol-%, beträgt. Zur Bestimmung des Monomerumsatzes werden die polymerisierenden Tropfen an der Stelle, wo der partikuläre Feststoff zugesetzt wird, in einem geeigneten Lösungsmittel mit einem geeigneten Polymerisationsinhibitor, aufgefangen. Anschließend kann der Monomergehalt der aufgefangenen Tropfen nach üblichen Methoden bestimmt werden. Bei niedrigen Monomerumsätzen können die partikuläre Feststoffe tiefer in die Tropfen eindringen und werden fester gebunden. Weiterhin können auch größere Anteile an partikulären Feststoffen eingearbeitet werden.

In einer weiteren Ausführungsform der vorliegenden Erfindung fallen die polymerisierenden Tropfen in eine Wirbelschicht und die Beschichtung mit dem partikulären Feststoff wird erst in der Wirbelschicht durchgeführt. Aufgrund der längeren Verweilzeit ist hierbei die Beschichtungsausbeute höher.

Selbstverständlich sind auch Kombinationen der vorgenannten Ausführungsformen möglich.

Die Art der Monomeren und deren Konzentration in der Flüssigkeit unterliegen keiner Beschränkung. So ist es möglich Monomere in Substanz oder als Lösung in einem geeigneten Lösungsmittel, beispielsweise Methanol, Diethylether oder Wasser, zu polymerisieren. Vorzugsweise werden im erfindungsgemäßen Verfahren ethylenisch ungesättigte Monomere eingesetzt.

Ethylenisch ungesättigte Monomere sind beispielsweise ethylenisch ungesättigte C₃-C₆-Carbonsäuren. Bei diesen Verbindungen handelt es sich beispielsweise um Acrylsäure, Methacrylsäure, Ethacrylsäure, a-Chloracrylsäure, Crotonsäure, Maleinsäure, Maleinsäureanhydrid, Itaconsäure, Citraconsäure, Mesaconsäure, Glutaconsäure, Aconitsäure und Fumarsäure sowie die Alkali- oder Ammoniumsalze dieser Säuren.

Weitere geeignete Monomere sind Acrylamidopropansulfonsäure, Vinylphosphonsäure und/oder Alkali- bzw. Ammoniumsalze der Vinylsulfonsäure, wobei Säuren entweder in nicht neutralisierter Form oder in partiell bzw. bis zu 100 % neutralisierter Form eingesetzt werden.

Weiterhin kommen monoethylenisch ungesättigte Sulfon- oder Phosphonsäuren als Monomere in Betracht, beispielsweise Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Allylphosphonsäure, Styrolsulfonsäure und 2-Acrylamido-2-methylpropansulfonsäure.

Weitere geeignete Monomere sind beispielsweise Acrylamid, Methacrylamid, Crotonsäureamid, Acrylnitril, Methacrylnitril, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat sowie deren Quarternisierungsprodukte, beispielsweise mit Methylchlorid, Hydroxyethylacrylat, Hydroxyethylmethacrylat, Hydroxypropylacrylat und Hydroxypropylmethacrylat. Weitere geeignete Monomere sind Monomere, die durch Umsetzung von stickstoffhaltigen Heterocyclen und/oder Carbonsäureamiden, wie Vinylimidazol, Vinylpyrazol sowie Vinylpyrrolidon, Vinylcaprolactam und Vinylformamid, mit Acetylen erhältlich sind, die auch quarternisiert sein können, beispielsweise mit Methylchlorid, und Monomere, die durch Umsetzung von stickstoffhaltigen Verbindungen, wie Diallyldimethylammoniumchlorid, mit Allylalkohol oder Allylchlorid erhältlich sind.

Des Weiteren können auch Vinyl- und Allylester sowie Vinyl- und Allylether, wie Vinylacetat, Allylacetat, Methylvinylether und Methylallylether, als Monomere verwendet werden.

Die Monomeren können allein oder in Mischung untereinander eingesetzt werden, beispielsweise Mischungen, enthaltend zwei oder mehr Monomere.

Das erfindungsgemäße Verfahren eignet sich beispielsweise zur Herstellung wasserabsorbierender Polymerpartikel. Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die erzeugten Tropfen enthalten vorzugsweise
a) mindestens ein ethylenisch ungesättigtes Monomer,
b) mindestens einen Vernetzer,
c) mindestens einen Initiator und
d) Wasser.

Während der Beschichtung beträgt der Wassergehalt der polymerisierenden Tropfen vorzugsweise mindestens 15 Gew.-%, besonders bevorzugt mindestens 30 Gew.-%, ganz besonders bevorzugt mindestens 45 Gew.-%. Zur Bestimmung des Wassergehalts werden die polymerisierenden Tropfen an der Stelle, wo der partikuläre Feststoff zugesetzt wird, aufgefangen. Anschließend kann der Wassergehalt der aufgefangenen Tropfen nach üblichen Methoden, beispielsweise Karl-Fischer-Titration, bestimmt werden.

In einer bevorzugten Ausführungsform der vorliegenden Erfindung sind die zur Beschichtung verwendeten partikulären Feststoffe selber wasserabsorbierende Polymerpartikel.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ).

Die Monomerlösung enthält vorzugsweise höchstens 160 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.
Die Monomerlösung enthält vorzugsweise mindestens 0,1 Gew.-%, bevorzugt mindestens 0,2 Gew.-%, besonders bevorzugt mindestens 0,3 Gew.-%, ganz besonders bevorzugt mindestens 0,4 Gew.-%, Vernetzer b), jeweils bezogen auf Monomer a).

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a).

Die Polymerisationsinhibitoren können auch durch Absorption, beispielsweise an Aktivkohle, entfernt werden.

Der Feststoffgehalt der Monomerlösung beträgt vorzugsweise mindestens 35 Gew.-%, bevorzugt mindestens 38 Gew.-%, besonders bevorzugt mindestens 40 Gew.-%, ganz besonders bevorzugt mindestens 42 Gew.-%. Dabei ist der Feststoffgehalt die Summe aller nach der Polymerisation nichtflüchtigen Bestandteile. Dies sind Monomer a), Vernetzer b) und Initiator c).

Der Sauerstoffgehalt der Monomerlösung beträgt vorzugsweise mindestens 1 Gew.-ppm, besonders bevorzugt mindestens 2 Gew.-ppm, ganz besonders bevorzugt mindestens 5 Gew.-ppm. Auf die übliche Inertisierung der Monomerlösung kann daher weitgehend verzichtet werden.

Der erhöhte Sauerstoffgehalt stabilisiert die Monomerlösung und ermöglicht die Verwendung geringerer Mengen an Polymerisationsinhibitor und vermindert damit die durch den Polymerisationsinhibitor verursachten Produktverfärbungen.

Die Monomerlösung wird zur Polymerisation in die Gasphase dosiert. Der Sauerstoffgehalt der Gasphase beträgt vorzugsweise 0,001 bis 0,15 Vol.-%, besonders bevorzugt 0,002 bis 0,1 Vol.-%, ganz besonders bevorzugt 0,005 bis 0,05 Vol.-%.

Die Gasphase enthält neben Sauerstoff vorzugsweise nur inerte Gase, d.h. Gase, die unter Reaktionsbedingungen nicht in die Polymerisation eingreifen, beispielsweise Stickstoff und/oder Wasserdampf.

Vorzugsweise werden weitgehend monodisperse Tropfenketten erzeugt, beispielsweise mittels einer Vertropferplatte oder einem Vertropferrohr.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird.

Ein Vertropferrohr ist eine Rohr mit mindestens einer Bohrung, wobei die Flüssigkeit von oben durch die Bohrung tritt. Das Vertropferrohr bzw. die Flüssigkeit kann in Schwingungen versetzt werden, wodurch an der Unterseite des Vertropferrohrs je Bohrung eine idealerweise monodisperse Tropfenkette erzeugt wird.

Die Anzahl und die Größe der Bohrungen werden gemäß der gewünschten Kapazität und Tropfengröße ausgewählt. Der Tropfendurchmesser beträgt dabei üblicherweise das 1,9fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Der Vertropfer wird im Strömungsbereich des laminaren Strahlzerfalls betrieben, d.h. die Reynoldszahl bezogen auf den Durchsatz pro Bohrung und den Bohrungsdurchmesser ist vorzugsweise kleiner als 2.000, bevorzugt kleiner 1.000, besonders bevorzugt kleiner 500, ganz besonders bevorzugt kleiner 100. Der Druckverlust über die Bohrung beträgt vorzugsweise weniger als 2,5 bar, besonders bevorzugt weniger als 1,5 bar, ganz besonders bevorzugt weniger als 1 bar.

Der Durchmesser der Bohrungen wird an die gewünschte Tropfengröße angepasst. Die erzeugten Tropfen weisen eine mittlere Tropfengröße von vorzugsweise mindestens 200 µm, besonders bevorzugt von mindestens 250 µm, ganz besonders bevorzugt von mindestens 300 µm, auf, wobei der Tropfendurchmesser durch Lichtstreuung bestimmt werden kann.

Die Vertropfung kann aber auch mittels pneumatischer Ziehdüsen, Rotation, Zerschneiden eines Strahls oder schnell ansteuerbarer Mikroventildüsen durchgeführt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Vertropfung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Bevorzugt strömt die Gasphase als Trägergas durch den Reaktionsraum. Dabei kann das Trägergas im Gleichstrom oder im Gegenstrom zu den frei fallenden Tropfen der Monomerlösung durch den Reaktionsraum geführt werden, bevorzugt im Gleichstrom. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1%.

Die Gasgeschwindigkeit wird vorzugsweise so eingestellt, dass die Strömung im Polymerisationsreaktor gerichtet ist, beispielsweise liegen keine der allgemeinen Strömungsrichtung entgegengesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird zweckmäßigerweise vor dem Reaktor auf die Reaktionstemperatur vorgewärmt.

Die Reaktionstemperatur beträgt bei der thermisch induzierten Polymerisation vorzugsweise 100 bis 250°C, besonders bevorzugt 120 bis 200°C, ganz besonders bevorzugt 150 bis 180°C.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Gas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt kann dem Reaktor in üblicher Weise entnommen werden und wahlweise bis zur gewünschten Restfeuchte und zum gewünschten Restmonomerengehalt getrocknet werden.

Das Reaktionsprodukt wird vorzugsweise in mindestens einer Wirbelschicht getrocknet.

Die Polymerpartikel können zur weiteren Verbesserung der Eigenschaften nachvernetzt werden.

Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 170 bis 250°C, bevorzugt 180 bis 220°C, und besonders bevorzugt 190 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Das erfindungsgemäße Verfahren ermöglicht die Herstellung wasserabsorbierender Polymerpartikel mit gleichbleibenden Eigenschaften.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 100 g/g. Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

Der mittlere Durchmesser der gemäß dem erfindungsgemäßen Verfahren erhältlichen wasserabsorbierenden Polymerpartikel beträgt vorzugsweise mindestens 200 µm, besonders bevorzugt von 250 bis 600 µm, ganz besonders von 300 bis 500 µm, wobei der Partikeldurchmesser durch Lichtstreuung bestimmt werden kann und den volumengemittelten mittleren Durchmesser bedeutet. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

## Patentansprüche

1. Verfahren zur Herstellung von Polymerpartikeln durch Polymerisation von Flüssigkeitstropfen, enthaltend mindestens ein Monomer, in einer die Tropfen umgebenden Gasphase, **dadurch gekennzeichnet, dass** die Tropfen während der Polymerisation mit partikulären Feststoffen beschichtet werden und der Monomerumsatz während der Beschichtung weniger als 90 mol-% beträgt.

2. Verfahren gemäß Anspruch 1, **dadurch gekennzeichnet, dass** die Tropfen einen mittleren Durchmesser von mindestens 200 µm aufweisen.

3. Verfahren gemäß Anspruch 1 oder 2, **dadurch gekennzeichnet, dass** die partikulären Feststoffe einen Durchmesser von weniger als 200 µm aufweisen.

4. Verfahren gemäß einem der Ansprüche 1 bis 3, **dadurch gekennzeichnet, dass** die partikulären Feststoffe Polymerpartikel sind.

5. Verfahren gemäß einem der Ansprüche 1 bis 4, **dadurch gekennzeichnet, dass** die partikulären Feststoffe rückgeführte Polymerpartikel sind.

6. Verfahren gemäß einem der Ansprüche 1 bis 5, **dadurch gekennzeichnet, dass** der Monomerumsatz während der Beschichtung weniger als 75 mol-% beträgt.

7. Verfahren gemäß einem der Ansprüche 1 bis 5, **dadurch gekennzeichnet, dass** die Beschichtung in einer Wirbelschicht durchgeführt wird.

8. Verfahren zur Herstellung wasserabsorbierender Polymerpartikel gemäß einem der Ansprüche 1 bis 7, **dadurch gekennzeichnet, dass** die Tropfen eine Lösung, bestehend aus
a) mindestens einem ethylenisch ungesättigten Monomer,
b) mindestens einem Vernetzer,
c) mindestens einem Polymerisationsinitiator und
d) Wasser,
enthalten.

9. Verfahren gemäß Anspruch 8, **dadurch gekennzeichnet, dass** der Wassergehalt der polymerisierenden Tropfen während der Beschichtung mindestens 15 Gew.-% beträgt.

10. Verfahren gemäß Anspruch 8 oder 9, **dadurch gekennzeichnet, dass** Monomer a) zu mindestens 50 mol-% Acrylsäure ist.

11. Verfahren gemäß einem der Ansprüche 8 bis 10, **dadurch gekennzeichnet, dass** die Tropfen mindestens 0,1 Gew.-% Vernetzer b), bezogen auf Monomer a), enthalten.

12. Wasserabsorbierende Polymerpartikel, erhältlich gemäß einem Verfahren der Ansprüche 8 bis 11.

## Claims

1. A process for producing polymer particles by polymerising liquid droplets comprising at least one Monomer in a gas phase surrounding the droplets, wherein the droplets are coated with particulate solids during the polymerization and the monomer conversion during the coating is less than 90 mol%.

2. The process according to claim 1, wherein the droplets have a mean diameter of at least 200 µm.

3. The process according to claim 1 or 2, wherein the particulate solids have a diameter of less than 200 µm.

4. The process according to any of claims 1 to 3, therein the particulate solids are polymer particles.

5. The process according to any of claims 1 to 4, wherein the particulate solids are recycled polymer particles.

6. The process according to any of claims 1 to 5, wherein the monomer conversion during the coating is less than 75 mol%.

7. The process according to any of claims 1 to 5, wherein the coating is performed in a fluidized bed.

8. A process for preparing water-absorbing polymer particles according to any of claims 1 to 7, wherein the droplets comprise a solution consisting of
a) at least one ethylenically unsaturated monomer,
b) at least one crosslinker,
c) at least one polymerization Initiator and
d) water.

9. The process according to claim 8, wherein the water content of the polymerizing droplets during the coating is at least 15% by weight.

10. The process according to claim 8 or 9, wherein monomer a) is acrylic acid to an extent of at least 50 mol%.

11. The process according to any of claims 8 to 10, wherein the droplets comprise at least 0.1% by weight of crosslinker b), based on monomer a).

12. Water-absorbing polymer particles obtainable by a process of claims 8 to 11.

## Revendications

1. Procédé de fabrication de particule polymères par polymérisation de gouttelettes liquides, contenant au moins un monomère, dans une phase gazeuse entourant les gouttelettes, **caractérisé en ce que** les gouttelettes sont revêtues avec des solides particulaires pendant la polymérisation et la conversion des monomères pendant le revêtement est inférieure à 90 % en moles.

2. Procédé selon la revendication 1, **caractérisé en ce que** les gouttelettes présentent un diamètre moyen d'au moins 200 µm.

3. Procédé selon la revendication 1 ou 2, **caractérisé en ce que** les solides particulaires présentent un diamètre inférieur à 200 µm.

4. Procédé selon l'une quelconque des revendications 1 à 3, **caractérisé en ce que** les solides particulaires sont des particules polymères.

5. Procédé selon l'une quelconque des revendications 1 à 4, **caractérisé en ce que** les solides particulaires sont des particules polymères recyclées.

6. Procédé selon l'une quelconque des revendications 1 à 5, **caractérisé en ce que** la conversion des monomères pendant le revêtement est inférieur à 75 % en molles.

7. Procédé selon l'une quelconque des revendications 1 à 5, **caractérisé en ce que** le revêtement est réalisé dans un lit fluidisé.

8. Procédé de fabrication de particules polymères absorbant l'eau selon l'une quelconque des revendications 1 à 7, **caractérisé en ce que** les gouttelettes contiennent une solution constituée par
a) au moins un monomère éthyléniquement insaturé,
b) au moins un argent de réticulation,
c) au moins un initiateur de polymérisation et
d) de l'eau.

9. Procédé selon la revendication 8, **caractérisé en ce que** la teneur en eau des gouttelettes polymérisantes est d'au moins 15 % en poids pendant le revêtement.

10. Procédé selon la revendication 8 ou 9, **caractérisé en ce que** le monomère a) est de l'acide acrylique à hauteur d'au moins 50 % en moles.

11. Procédé selon l'une quelconque des revendications 8 à 10, **caractérisé en ce que** les gouttelettes contiennent au moins 0,1 % en poids d'agent de réticulation b) par rapport au monomère a).

12. Particules polymères absorbant l'eau, pouvant être obtenues par un procédé selon les revendications 8 à 11.
